(19) **Europäisches Patentamt European Patent Office Office européen des brevets**

(11) **EP 3 990 563 B1**

(12) **EUROPEAN PATENT SPECIFICATION**

(45) Date of publication and mention of the grant of the patent:
**18.03.2026 Bulletin 2026/12**

(21) Application number: **20737698.9**

(22) Date of filing: **18.06.2020**

(51) International Patent Classification (IPC):
*C09J 175/06* (2006.01)  *C09J 175/08* (2006.01)
*C08G 18/00* (2006.01)  *C08G 18/10* (2006.01)
*C08G 18/12* (2006.01)  *C08G 18/16* (2006.01)
*C08G 18/20* (2006.01)  *C08G 18/24* (2006.01)
*C08G 18/32* (2006.01)  *C08G 18/48* (2006.01)
*C08G 18/50* (2006.01)  *C08G 18/66* (2006.01)
*C08G 18/73* (2006.01)  *C08G 18/76* (2006.01)
*C08G 18/79* (2006.01)

(52) Cooperative Patent Classification (CPC):
(C-Sets available)
**C09J 175/06; C08G 18/003; C08G 18/10;
C08G 18/12; C08G 18/165; C08G 18/2081;
C08G 18/244; C08G 18/3206; C08G 18/3281;
C08G 18/482; C08G 18/4825; C08G 18/4829;
C08G 18/485; C08G 18/5024; C08G 18/6674;**
(Cont.)

(86) International application number:
**PCT/US2020/038331**

(87) International publication number:
**WO 2020/263663 (30.12.2020 Gazette 2020/53)**

(54) **ACCELERATE CURE POLYURETHANE ADHESIVE COMPOSITION**

BESCHLEUNIGT HÄRTENDE POLYURETHANKLEBSTOFFZUSAMMENSETZUNG

COMPOSITION ADHÉSIVE DE POLYURÉTHANE À DURCISSEMENT ACCÉLÉRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2019 US 201962866022 P**

(43) Date of publication of application:
**04.05.2022 Bulletin 2022/18**

(73) Proprietor: **DDP Specialty Electronic Materials
US, LLC
Wilmington, DE 19805 (US)**

(72) Inventors:
• **KOCH, Felix
8807 Freienbach (CH)**
• **SCHMATLOCH, Stefan
8807 Freienbach (CH)**

• **ZUEGER, Edwin
8810 Horgen (CH)**
• **TASSELLI, Gabriele
8807 Freienbach (CH)**
• **GRUNDER, Sergio
8807 Freienbach (CH)**
• **ARDIZZONE, Filippo
8807 Freienbach (CH)**
• **LUTZ, Andreas
8807 Freienbach (CH)**

(74) Representative: **Abitz & Partner
Postfach 86 01 09
81628 München (DE)**

(56) References cited:
**EP-A1- 0 873 369      US-A- 6 133 398
US-A1- 2017 174 959**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**C08G 18/6688; C08G 18/73; C08G 18/7671; C08G 18/792; C09J 175/08**

C-Sets
**C08G 18/10, C08G 18/3206;
C08G 18/10, C08G 18/3281;
C08G 18/10, C08G 18/48;
C08G 18/10, C08G 18/50;
C08G 18/10, C08G 18/6674;
C08G 18/10, C08G 18/6688;
C08G 18/12, C08G 18/3206;**

**C08G 18/12, C08G 18/3281;
C08G 18/12, C08G 18/48;
C08G 18/12, C08G 18/50;
C08G 18/12, C08G 18/6674;
C08G 18/12, C08G 18/6688;
C09J 175/06, C08K 3/04, C08K 5/0016;
C09J 175/06, C08K 3/346, C08K 3/04,
C08K 5/0016;
C09J 175/08, C08K 3/04, C08K 5/0016;
C09J 175/08, C08K 3/346, C08K 3/04,
C08K 5/0016**

**Description**

FIELD OF INVENTION

The invention relates to moisture curable adhesive compositions useful for bonding glass into vehicles and buildings. In particular, the invention relates to moisture curable isocyanate terminated prepolymer adhesive compositions coupled with a separate cure accelerator having two curatives components having different cure kinetics, one having faster curing kinetics resulting an increase in bead stability within the first minutes and a with slower curing kinetics allowing for sufficient open time and yet a fast strength build up.

BACKGROUND OF INVENTION

One-part moisture curing adhesive compositions have been used to bond windows into buildings and vehicles. Examples of adhesives useful for these applications are described in USP 4,374,237; 4,687,533; 4,780,520; 5,063,269; 5,623,044; 5,603,798; 5,922,809; 6,015,475; 6,512,033; 6,657,035; 6,709,539; 7,101, 950; 7,226,523; 7,361,292; 8,236,891; 6,133,398; EP 0 873 369; CA 2,564,992; and WO 2015/171307. In automobile factories windows are installed using robots and computer-controlled processing which facilitates the use of a variety of high-performance adhesives, for instance, nonconductive adhesives and high modulus adhesives. The speed of cure is not a significant issue because new vehicles are not driven any significant distance for several days after window installation.

In contrast, when a vehicle needs a window replaced, it is often driven shortly after. The replacement is often performed in a remote location by an installer working from a vehicle or otherwise under uncontrolled conditions. Consequently, speed of cure is important as the vehicle owner desires to drive the vehicle as soon as possible after installation of the window. One-part moisture curing adhesives useful in replacing windows for vehicles which facilitate fast drive away times have been described in USP 5,976,305; 6,709,539 and 7,226,523. Even though these adhesives have built up enough integrity to be driven away in a short time, they still have required much longer times to fully cure and inconsistently cured depending on the ambient conditions such as temperature and relative humidity.

Two-part compositions containing isocyanate functional compounds or prepolymers in one part and compounds and/or prepolymers having isocyanate reactive components have also been used. It is understood that the two parts commonly referred to as the A and B side have essentially the same volume. Examples of two-part compositions containing isocyanate functional compounds or prepolymers in one part and compounds and/or prepolymers having isocyanate reactive components in the other part are disclosed in EP 1,524,282, and USP 5,852,103; 6,709,539; 7,101,950 and 7,361,292. These tend to suffer, however, from complex delivery systems, to keep the two parts separate as well as requiring sufficient mixing when dispensing to realize a uniform product. Likewise, two-part adhesive compositions tend to react quickly and may form skins resulting in insufficient working time to allow proper positioning of the replacement window under certain conditions (higher temperatures and higher relative humidity). Thus, even though a two-part composition may allow automobiles with replacement windows to be driven within 30 minutes of bonding the window into the automobile, they have not in general allowed any quicker drive away times and care must be taken to ensure a uniform adhesive bead.

More recently, a two-part dual cure adhesive composition comprised of isocyanate terminated prepolymers in one part and an acrylic acrylate monomer in the other part has been described in WO 2012/151085. In this composition one part contains an isocyanate terminated polyether prepolymer and the other part contains a hydroperoxide compound and acrylic or acrylate monomer, where the hydroperoxide compound is reduced upon mixing with the other part forming free radicals to realize sufficient integrity from the development of an initial polyacrylic or polyacrylate matrix to allow relatively fast drive away times. However, the working time, consistency of the bead, workability, ultimate cure properties were less than desirable.

Thus, it would be desirable to have a rapid drive away adhesive for bonding glass into a structure that cures sufficiently to allow for driving away in a short amount of time such as even 15 minutes while also providing for consistent uniform adhesive beads and sufficient workability (time where the glass may be placed and manipulated and still have adequate adhesion) under varying ambient conditions.

SUMMARY OF INVENTION

The present invention is defined by the appended claims.

In one embodiment, the present invention is an adhesive system comprised of, consisting essentially of, consisting of a moisture curable adhesive comprised of, consisting essentially of, consisting of: A) an isocyanate terminated prepolymer and B) a cure accelerator comprised of i) an isocyanate reactive compound being triethanolamine, and ii) a polyol not having a primary, secondary or tertiary amino group, or a primary thiol group wherein the polyol is selected from a diol and/or triol, wherein the isocyanate reactive compound (i) is present in an amount less than 5% by weight of the cure accelerator (B).

Another embodiment of the present invention is a method of accelerating the cure of an adhesive composition comprising, consisting essentially of, consisting of the steps of: a) providing a moisture curable adhesive composition comprised of A) an isocyanate terminated prepolymer and B) a cure accelerator comprised of i) an isocyanate reactive compound being triethanolamine, and ii) a polyol not having a primary, secondary or tertiary amino group, or a primary thiol group wherein the polyol is selected from a diol and/or triol; wherein the isocyanate reactive compound (i) is present in an amount less than 5% by weight of the cure accelerator (B); wherein the isocyanate terminated prepolymer and cure accelerator are separately provided; b) mixing the cure accelerator and the isocyanate terminated prepolymer to form an adhesive mixture; c) applying the adhesive mixture to at least a portion of a first substrate; d) contacting the substrate having the adhesive mixture thereon with a second substrate such that the adhesive mixture is therebetween; and e) allowing the adhesive mixture to cure bonding said substrates together, preferably wherein the first substrate is a substrate wherein at least a portion of the substrate is optically transparent and the second substrate is a vehicle or building, more preferably wherein the first substrate has an opaque portion where the adhesive mixture is applied and contacted with the second substrate, preferably wherein the first substrate is glass or polycarbonate.

BRIEF DESCRIPTION OF THE DRAWINGS

FIG. 1 is a plot of the decking height versus time for Comparative Example A and Example 8.
FIG. 2 is a plot of the decking height versus time for Examples 9 to 11.

DETAILED DESCRIPTION OF INVENTION

The present invention is the formulation of an accelerated polyurethane adhesive which cures independent of humidity and a method to use said accelerated polyurethane adhesive. The inventive adhesive shows the curing performance of a 2K adhesive in combination with application performance of a 1K adhesive using a standard 1K application gun typically used for 1K polyurethane adhesive cartridges or sausages or automated application equipment from drums.

In one embodiment, the inventive adhesive is applied using a 2 K packaging solution such as a peeler cartridge or a sausage in sausage solution both of which can be used in standard 1K application gun in combination with a static mixer, for example see USP 9,821,512. The use of a static mixer necessitates a low viscosity of both adhesive components to allow a sufficiently fast application speed.

In conventional adhesives, low viscosity of both components to allow for mixing with a static mixer typically resulted in a low stability of the bead against subsiding of a window, sometimes referred to as the decking performance. This invention addresses the use of a low viscosity adhesive formulations which build up strength quickly to allow shortly after adhesive application to deck the window onto the adhesive while at the same time, the buildup strength does not negatively affect the open time of the adhesive. This results in a length of time starting when the adhesive has sufficient strength to hold a window (decking height ≤ 5.5mm) and the time at which the strength of the adhesive bead becomes too high to squeeze the window into the adhesive bead (decking height ≥ 1.7 mm) to be at least 10 min or greater. This is achieved in the inventive adhesive by formulating the polyol component with two curatives having different kinetics, one which is "fast" resulting an increase in bead stability within the first minutes and a second curative which has a "slow" curing kinetic allowing for sufficient open time and yet still a fast strength build up. The fast curative is triethanolamine The slow curative is a polyol not having a primary, secondary or tertiary amino group, or a primary thiol group selected from a diol or a triol, for example a polyether diol or an alkyldiols (e.g., 1,4-butanediol).

It has been discovered that the moisture curable adhesive composition of the present invention comprising an isocyanate terminated prepolymer may be cured in substantially less time while still having sufficient working time and final cured properties desired for installing aftermarket glass when repairing chipped or broken glass in vehicles. Illustratively, the adhesive mixture may have a working time on the order of 5, 8, 10, or even 15 minutes, while being essentially cured in 60 minutes. Likewise, the method of the present invention allows for consistent application of these moisture curable adhesives under widely different ambient conditions.

The adhesive system of the invention may be used to bond a variety of substrates together. Examples of substrates include plastic, glass, wood, ceramics, metal, and coated substrates, such as plastics coated with an abrasion resistant coating. The adhesive system of the invention may be used to bond similar and dissimilar substrates together. The adhesives are especially useful for bonding glass or a plastic with an abrasion resistant coating disposed thereon to other substrates such as vehicles (e.g., automobiles) and buildings. The compositions of the invention are also useful in bonding parts of modular components together, such as vehicle modular components. The glass or plastic coated with an abrasion resistant coating may be bonded to coated and uncoated portions of vehicles.

The compositions of the invention are especially useful in bonding replacement windows into structures. The adhesive is pumpable, sag resistant and bonds parts together at temperatures between -10°C and 45°C. Preferably, the composition has a sag of an uncured sample of less than 2 mm and decking force of between 1.5 pounds and 15 pounds under typical ambient conditions (i.e., temperatures of -10°C to 35°C and relative humidities of 25% to 75%). Preferably, the decking height between the time when the adhesive has sufficient strength to hold a window to the time at which the strength of the adhesive bead is high enough to squeeze the window into the adhesive bead is equal to or less than 5.5mm to equal to or greater than 1.0 mm.

This allows the adhesives prepared from the composition of the invention to be applied at a wide range of ambient temperatures. Heating the material is not necessary for the application of the adhesive. It has been surprisingly discovered that the adhesive system can offer the unique combination of realizing a suitable decking force to allow placement of the windshield shortly after application and for a sufficient time to allow repositioning coupled with a fast cure allowing for a vehicle to be driven away even after only 30 minutes.

"Nominal" as used with respect to functionality means the theoretical functionality, generally this can be calculated from the stoichiometry of the ingredients used. Generally, the actual functionality is different due to imperfections in raw material, incomplete conversion of the reactants and formation of bi-products.

Preferable polyisocyanates for use in preparing the prepolymer include those disclosed in USP 5,922,809 at col. 3, line 32 to column 4, line 24. Preferably, the polyisocyanate is an aromatic or cycloaliphatic polyisocyanate such as diphenylmethane-4,4'-diisocyanate, isophorone diisocyanate, tetramethylxylene diisocyanate, and is most preferably diphenylmethane-4,4'-diisocyanate. The diols and triols are generically referred to as polyols.

The prepolymers are made from polyols such as diols and triols such as those described in USP 5,922,809 at column 4, line 60 to column 5, line 50. The polyols (diols and triols) are preferably polyether polyols and more preferably polyoxyalkylene oxide polyols. The most preferred triols are ethylene oxide-capped polyols prepared by reacting glycerin with propylene oxide, followed by reacting the product with ethylene oxide.

It is also understood that a small amount of other polyols may be used to form the polyether prepolymer such as a polyester polyol such as those known in the art. Typically, such other polyols may be present in an amount of up to 5% by weight of the polyols used to make said prepolymer. However, said prepolymer may be made in the absence of such polyols.

The isocyanate terminated prepolymers may be prepared by any suitable method, such as bulk polymerization and solution polymerization. The reaction to prepare the prepolymer is carried out under anhydrous conditions, preferably under an inert atmosphere such as a nitrogen blanket and to prevent crosslinking of the isocyanate groups by atmospheric moisture. The reaction is preferably carried out at a temperature between 0°C and 150°C, more preferably between 25°C and 90°C, until the residual isocyanate content determined by titration of a sample is very close to the desired theoretical value. "Isocyanate content" means the weight percentage of isocyanate moieties to the total weight of the prepolymer. The reactions to prepare the prepolymer may be carried out in the presence of urethane catalysts. Examples of such include the stannous salts of carboxylic acids, such as stannous octoate, stannous oleate, stannous acetate, and stannous laurate. Also, dialkyltin dicarboxylates such as dibutyltin dilaurate and dibutyltin diacetate are known in the art as urethane catalysts, as are tertiary amines and tin mercaptides. Preferably, the reaction to prepare the prepolymer is catalyzed by stannous octoate. The amount of catalyst employed is generally between 0.005 and 5 parts by weight of the mixture catalyzed, depending on the nature of the isocyanate. Preferably, the reaction is carried out in admixture with a plasticizer further described below.

The moisture curable adhesive generally is also comprised of a filler such as a carbon black. The carbon blacks depending on their structure and the molecular weight of the prepolymers may range over a wide range of structures as given by oil absorption number (ASTM D-2414-09). For example, the carbon black typically desirably has an oil absorption number (OAN) of 80 to 200 ccs per 100 grams. Preferably, the oil absorption of the carbon is at least 90, more preferably at least 100, and most preferably at least 110 to preferably at most 180, more preferably at most 165 and most preferably at most 150 ccs/100 grams.

The amount of carbon black suitable may be determined for a given carbon black. Typically, the amount of carbon black is at least in ascending desirability, 10%, 15%, to at most, in ascending desirability, 38%, 35%, 32%, 30% or 28% by weight of the adhesive composition.

The carbon black used may be a standard carbon black which is not specially treated to render it nonconductive. Standard carbon black is carbon black which is not specifically surface treated or oxidized. Alternatively, one or more nonconductive carbon blacks may be used exclusively or in conjunction with the standard carbon black. Suitable standard carbon blacks include RAVEN™ 790, RAVEN™ 450, RAVEN™ 500, RAVEN™ 430, RAVEN™ 420 and RAVEN™ 410 carbon blacks available from Colombian and CSX carbon blacks such as ELFTEX S5100 and S7100 and MONARCH 120, 570, and 590 available from Cabot, and PRINTEX™ 30 carbon black available from Evonik Industries, Mobile, AL. Suitable non-conductive carbon blacks include RAVEN™ 1040 and RAVEN™ 1060 carbon black available from Colombian Chemicals Company, Marietta, GA.

The moisture curable adhesive may also be comprised of reactive silicon. The reactive silicon may be present as a separate molecule such as a silane. It may be present within the backbone or as a terminal group in the prepolymer described above. The reactive silicon generally is one that can undergo hydrolysis such as described at column 4, lines 25 to 55 of USP 6,613,816. Other illustrative reactive silicones are described in USP Publication 2002/0100550 paragraphs 0055 to 0065 and Hsieh, U.S. 6,015,475, column 5, line 27 to column 6, line 41.

The amount of reactive silicon, when present in the moisture curable adhesive is, generally, 0.001% to 2% by weight of the total weight of the adhesive composition. The amount of the reactive silicon (note, the weight of the silicon itself and does not include, for example, the organic groups appended thereto), may be at least 0.005%, 0.01%, 0.02%, 0.04%, 0.06%, 0.08% or 0.1% to at most 1.8%, 1.6%, 1.4%, 1.2%, 1%, 0.8%, 0.5% of the adhesive composition.

The moisture curable adhesive may also be comprised of one or more organic based polymers dispersed therein. Preferably, the organic based polymer is included in the prepolymer by inclusion of a dispersion triol having dispersed therein particles of an organic based polymer. Dispersion triols typically understood to have at least a portion of the particles being grafted with the polyol. The preferable dispersion triols are disclosed in Zhou, USP 6,709,539 at column 4, line 13 to column 6, line 18. Preferably, the triol used to disperse the organic particles is a polyether triol and more preferably a polyoxyalkylene based triol. Preferably, such polyoxyalkylene oxide triol comprises a polyoxypropylene chain with a polyoxyethylene end cap. Preferably, the triols used have a molecular weight of 3,000 or greater, more preferably 4,000 or greater and most preferably 5,000 or greater. Preferably, such triol has molecular weight of 8,000 or less and more preferably 7,000 or less. It is understood that the polyol of the dispersion polyol (e.g., triol) is included in the polyol to make the prepolymer composition described herein, where the copolymer particles of the dispersion polyol are understood to be fillers in the composition.

The moisture curable adhesive typically is further comprised of a plasticizer. The plasticizers may be used so as to modify the rheological properties to a desired consistency. Such materials should be free of water and be inert to isocyanate groups. The plasticizers may be common plasticizers useful in polyurethane adhesive applications and well known to those skilled in the art and are referred to hereinafter as low polar plasticizers. The plasticizer is present in an amount sufficient to disperse the isocyanate terminated prepolymer. The plasticizer can be added to the prepolymer either during preparation of the prepolymer or during compounding of the prepolymer prior to being placed into the first compartment. Preferably, the plasticizer is present in 1 percent by weight or greater of the prepolymer formulation (prepolymer plus plasticizer), more preferably 20 percent by weight or greater and most preferably 30 percent by weight or greater. Preferably, the plasticizer is present in 45 percent by weight or less of the prepolymer formulation and more preferably 35 percent by weight or less.

Preferably two plasticizers are used, with one being a high polar plasticizer and one being a low polar plasticizer. A high polar plasticizer is a plasticizer with a polarity greater than the polarity of the aromatic diesters, such as the phthalate esters. A low polar plasticizer is a plasticizer which has a polarity the same as or less than the aromatic diesters.

Suitable high polar plasticizers include one or more of alkyl esters of sulfonic acid, alkyl alkylethers diesters, polyester resins, polyglycol diesters, polymeric polyesters, tricarboxylic esters, dialkylether diesters, dialkylether aromatic esters, aromatic phosphate esters, and aromatic sulfonamides. More preferred high polar plasticizers include aromatic sulfonamides, aromatic phosphate esters, dialkyl ether aromatic esters and alkyl esters of sulfonic acid. Most preferred high polar plasticizers include alkyl esters of sulfonic acid and toluene-sulfamide. Alkyl esters of sulfonic acid include alkylsulphonic phenyl ester available from Lanxess under the trademark MESAMOLL. Aromatic phosphate esters include PHOSFLEX™ 31 L isopropylated triphenyl phosphate ester, DISFLAMOLL™ DPO diphenyl-2-ethyl hexyl phosphate, and DISFLAMOL™ TKP tricresyl phosphate. Dialkylether aromatic esters include BENZOFLE™ 2-45 diethylene glycol dibenzoate. Aromatic sulfonamides include KETJENFLE™ 8 o and p, N-ethyl toluenesulfonamide.

Suitable low polar plasticizers include one or more aromatic diesters, aromatic triesters, aliphatic diesters, epoxidized esters, epoxidized oils, chlorinated hydrocarbons, aromatic oils, alkylether monoesters, naphthenic oils, alkyl monoesters, glyceride oils, parraffinic oils and silicone oils. Preferred low polar plasticizers include alkyl phthalates, such as diisononyl phthalates, dioctylphthalate and dibutylphthalate, partially hydrogenated terpene commercially available as "HB-40", epoxy plasticizers, chloroparaffins, adipic acid esters, castor oil, toluene and alkyl naphthalenes. The most preferred low polar plasticizers are the alkyl phthalates.

The amount of low polar plasticizer in the adhesive composition is that amount which gives the desired rheological properties, and which is sufficient to disperse the catalyst in the system. The amounts disclosed herein include those amounts added during preparation of the prepolymer and during compounding of the adhesive. Preferably, low polar plasticizers are used in an amount of 5 parts by weight or greater based on the weight of moisture curable adhesive, more preferably 10 parts by weight or greater, and most preferably 18 parts by weight or greater. The low polar plasticizer is preferably used in an amount of 40 parts by weight or less based on the total amount of moisture curable adhesive, more preferably 35 parts by weight or less and most preferably 30 parts by weight or less.

The amount of high polar plasticizer in the moisture curable adhesive is that amount which gives the desired rheological properties and the acceptable sag and string properties of the dispensed moisture curable adhesive. Preferably, if used, the high polar plasticizers are used in the moisture curable adhesive in an amount of 0.2 parts by weight or greater based on the weight of moisture curable adhesive, more preferably 0.5 parts by weight or greater, and most preferably 1 part by weight or greater. The high polar plasticizer is preferably used in an amount of 20 parts by weight or less based on the total amount of the moisture curable adhesive, more preferably 12 parts by weight or less and most preferably 8 parts by weight or less.

The moisture curable adhesive may further comprise a polyfunctional isocyanate, for example, to improve the modulus of the composition in the cured form or adhesion of the adhesion composition to particular substrates such as painted substrates. "Polyfunctional" as used in the context of the isocyanates refers to isocyanates having a functionality of 2 or greater. The polyisocyanates can be any monomeric, oligomeric or polymeric isocyanate having a nominal functionality of 2 or greater. More preferably, the polyfunctional isocyanate has a nominal functionality of 2.7 or greater. Preferably, the polyfunctional isocyanate has a nominal functionality of 5 or less, even more preferably 4.5 or less and most preferably 3.5 or less.

The polyisocyanates may be monomeric; trimeric isocyanurates or biurets of monomeric isocyanates; oligomeric or polymeric, the reaction product of several units of one or more monomeric isocyanates. Examples of preferred polyfunctional isocyanates include trimers of hexamethylene diisocyanate, such as those available from Bayer under the trademark and designation DESMODUR N3300 and N100, and polymeric isocyanates such as polymeric MDI (methylene diphenyl diisocyanates) such as those marketed by The Dow Chemical Company under the trademark of PAPI, including PAPI 580N polymeric isocyanate. The polyfunctional isocyanates, when present are typically present in an amount sufficient to impact the modulus of the cured compositions of the invention or improve the adhesion to certain substrates described above.

The polyfunctional isocyanate, when present, is preferably present in an amount of 0.5 parts by weight or greater based on the weight of the moisture curable adhesive, more preferably 1.0 parts by weight or greater and most preferably 2 parts by weight or greater. The polyfunctional isocyanate is preferably present in an amount of 12 parts by weight or less, based on the weight of the moisture curable adhesive, more preferably 8 parts by weight or less and most preferably 4 parts by weight or less.

The moisture curable adhesive may also be comprised of a catalyst that catalyzes the reaction of isocyanate moieties with water or an active hydrogen containing compound. Such compounds are well known in the art. The catalyst can be any catalyst known to the skilled artisan for the reaction of isocyanate moieties with water or active hydrogen-containing compounds. Among preferred catalysts are organotin compounds, metal alkanoates, and tertiary amines. Mixtures of classes of catalysts may be used. A mixture of a tertiary amine and a metal salt is preferred. Even more preferred are tertiary amines, such as dimorpholino diethyl ether or triethylenediamine, and a metal alkanoate, such as bismuth octoate or dimethyltin dineodecanoate. Included in the useful catalysts are organotin compounds such as alkyl tin oxides, stannous alkanoates, dialkyl tin carboxylates and tin mercaptides. Stannous alkanoates include stannous octoate. Alkyl tin oxides include dialkyl tin oxides, such as dibutyl tin oxide and its derivatives. The organotin catalyst is preferably a dialkyltin dicarboxylate or a dialkyltin dimercaptide. Dialkyltin dicarboxylates with lower total carbon atoms are preferred as they are more active catalysts in the compositions of the invention. The preferred dialkyl dicarboxylates include 1,1-dimethyltin dilaurate, 1,1-dibutyltin diacetate and 1,1-dimethyl dimaleate. Preferred metal alkanoates include bismuth octoate or bismuth neodecanoate.

The organotin or metal alkanoate catalyst, as percentage of the total weight of the moisture curable adhesive, is present, generally, in an amount of 60 parts per million or greater, preferably 120 parts by million or greater to at most 1.0 percent, preferably 0.5 percent by weight and more preferably 0.1 percent.

Useful tertiary amine catalysts include dimorpholinodialkyl ether, a di((dialkylmorpholino)alkyl) ether, bis-(2-dimethylaminoethyl)ether, triethylene diamine, pentamethyldiethylene triamine, N,N-dimethylcyclohexylamine, N,N-dimethyl piperazine 4-methoxyethyl morpholine, N-methylmorpholine, N-ethyl morpholine and mixtures thereof. A preferred dimorpholinodialkyl ether is dimorpholinodiethyl ether. A preferred di((dialkylmorpholino)alkyl) ether is (di-(2-(3,5-dimethylmorpholino)ethyl)ether). Tertiary amines, if used, are preferably employed in an amount, based on the weight of the moisture curable adhesive of 0.01 parts by weight or greater, more preferably 0.05 parts by weight or greater, even more preferably 0.1 parts by weight or greater and most preferably 0.2 parts by weight or greater and 2.0 parts by weight or less, more preferably 1.75 parts by weight or less, even more preferably 1.0 parts by weight or less and most preferably 0.4 parts by weight or less.

The moisture curable adhesive may be formulated with fillers other than the carbon black and additives known in the prior art for use in adhesive compositions. By the addition of such materials, physical properties such as viscosity flow rates can be modified. However, to prevent premature hydrolysis of the moisture sensitive groups of the isocyanate terminated prepolymer, fillers should be thoroughly dried before admixture therewith. Other exemplary fillers include clay, titanium dioxide, calcium carbonate, surface treated silica, titanium oxide, fumed silica, talc, wollastonite. In one embodiment, more than one reinforcing filler may be used.

The moisture curable adhesive may also have a stabilizer that inhibits and prevents premature crosslinking of the isocyanates in the adhesive. Stabilizers known to the skilled artisan for moisture curing adhesives may be used. Examples of stabilizers include diethylmalonate, alkylphenol alkylates, paratoluene sulfonic isocyanates, benzoyl chloride and orthoalkyl formates. Stabilizers are typically used in an amount of 0.1 parts by weight or greater based on the total weight of moisture curable adhesive, preferably 0.5 parts by weight or greater and more preferably 0.8 parts by weight or greater. Such stabilizers are used in an amount of 5.0 parts by weight or less based on the weight of the adhesive, more preferably 2.0 parts by weight or less and most preferably 1.4 parts by weight or less.

Other components commonly used in adhesive compositions may be used in the moisture curable adhesive. Such materials are well known to those skilled in the art and may include ultraviolet stabilizers, antioxidants, heat stabilizers.

The moisture curable adhesive may be formulated by blending the components together using means well known in the art. Generally, the components are blended in a suitable mixer. Such blending is preferably conducted in an inert atmosphere in the absence of oxygen and atmospheric moisture to prevent premature reaction. In embodiments where a substantial amount of polyester-based isocyanate functional prepolymer is used, the adhesive compositions may be blended at a temperature above the melting point of the polyester-based isocyanate functional prepolymer and below a temperature at which significant side reactions occur. In this embodiment, the temperatures utilized are from 40°C to less than 90°C, and more preferably 50°C to 70°C. Once the adhesive composition is formulated, it is packaged in a suitable container such that it is protected from atmospheric moisture and oxygen. Contact with atmospheric moisture and oxygen could result in premature crosslinking of the polyurethane prepolymer-containing isocyanate groups.

The adhesive system is also comprised of a fast cure accelerator comprised of an isocyanate reactive compound, being triethanolamine, having an amino group in the backbone of the polyol Generally, the amino groups present in the backbone are essentially all tertiary amines.

The average amount of amino groups in the isocyanate reactive compound having an amino group generally is from 1 to 6. Preferably, the average amount of amino groups present in the polyol having an amino group is at least 1.5, 2, 3.0, 3.5, or 3.8 to at most 4.8, 4.5 or 4.2.

Likewise, the OH number (OH#) of the isocyanate reactive compound having an amino group may be any useful to realize the desired cure rate and workability. Generally, the OH# is at least 25 to 2000. Preferably, the OH number is at least 100, 250, 500 or even 550. The OH number arises from a wet analytical method for the hydroxyl content of a polyol; it is the milligrams of potassium hydroxide equivalent to the hydroxyl content in one gram of polyol or other hydroxyl compound and is given by the below equation:

$$OH\ Number = \frac{56.1 \times 1000}{Equivalent\ Weight}$$

where 56.1 is the atomic weight of potassium hydroxide and 1000 is the number of milligrams in one gram of sample.

The isocyanate reactive compound having an amino group may also have any useful molecular weight. Generally, the molecular weight of said polyol is at least 200 to 10,000. Preferably the molecular weight is at most 5000, 3000, 1500, 1000, 500 or even 400. Preferably the molecular weight is at least 100, 200 or 250. In a preferred embodiment, the isocyanate reactive compound having an amino group has an average OH functionality of 3.5 to 4.2 and OH number of at least 500.

The cure accelerator may be comprised of a small amount of water so long that it does not deleteriously affect the cure rate, workability and cured properties of the adhesive mixture arising, for example, by causing bubbling. The amount of water in the cure accelerator, generally, is less than 1% based upon the total weight of the cure accelerator and the moisture curable adhesive. Typically, it is desirable for the amount of water to be as low as practicable such as only trace amounts such as 500 parts per million by weight of the total weight of the moisture curable adhesive and cure accelerator. Preferably, the amount of water is at most 100 ppm to no water or essentially no water using known methods for determining water content.

The cure accelerator may contain one or more of other ingredients such as filler, a polyol not having an amino group in the backbone, a catalyst, plasticizer, rheological modifier, UV stabilizers or other useful ingredients used moisture curable adhesives. The fillers, polyols, plasticizer and catalysts may be any one of those described previously or known in the art. The amount of each of these may be determined by the desired amount of isocyanate reactive groups (e.g., OH) and other physical characteristics such as rheological properties, which may be useful to ensure uniform mixing and applying of the adhesive system.

When a filler, polyol not containing an amino group, catalyst and plasticizer are contained in the cure accelerator they will typically be present in amounts as follows. The isocyanate reactive compound with the amino group is present in an amount of less than 5% by weight of the cure accelerator. The polyol without an amino group will typically present in an amount of 20% to 80% by weight of the cure accelerator. The filler or combination of fillers will typically be present in an amount of 10% to 35% of the cure accelerator. The catalyst or combination of catalyst will typically present in an amount of 0.01% to 2% of the cure accelerator.

The cure accelerator is used to accelerate the cure of a moisture curable adhesive. When doing so, the cure accelerator and moisture curable adhesive are provided separately, otherwise they will react prior to application. Any suitable method of providing two reactive materials having different volumes that are later mixed may be used such as those known in the art and described in copending application US Application No. 61/977668, filed April 10, 2014 to Zhu et. al., from page 1, line 10 to page 2, line 8. Preferably, the moisture curable adhesive and cure accelerator are provided in the two-component reactive dispensing system described in the aforementioned US Application.

Because the moisture curable adhesive is comprised of an isocyanate terminated prepolymer and is moisture curable, the isocyanate index of the adhesive system (i.e., the amount of isocyanates/reactive groups in the cure accelerator multiplied by 100) is generally 85 to 200, but preferably is 100 to 170. Likewise, because of the use of a moisture curable adhesive, generally, the volume ratio of cure accelerator to the moisture curable adhesive is 5 or 10 to 200, 100, 50 or 20. The iso index is essentially the same for all the examples and comparative examples.

The mixing, applying, contacting and allowing to cure of the moisture curable adhesive and cure accelerator may be accomplished by any suitable method such as those known in the art including those described in the aforementioned US Application. Preferably, the mixing, applying, contacting are performed using the method of the above US Application.

The adhesive system of the invention may be used to bond a variety of substrates together. The adhesive system may be used to bond porous and nonporous substrates together. The adhesive system is applied to a substrate and the adhesive on the first substrate is thereafter contacted with a second substrate. In preferred embodiments, the surfaces to which the adhesive is applied are cleaned and may be primed prior to application, but the primer is not necessary, see for example, USP 4,525,511; 3,707,521 and 3,779,794; for typical practices of application.

Generally, the adhesive system is applied at typical ambient conditions (23°C $\pm$10°C) in the presence of atmospheric moisture (typically a relative humidity of 20% to 99%). For the purposes of testing the curing behavior, an RH of 50% $\pm$ 5% at 23°C $\pm$ 2°C is suitable. Curing may be accelerated by the addition of additional water in the atmosphere or by applying heat during curing of the adhesive by means of convection heat, microwave heating.

The adhesive system is preferably used to bond glass or plastic coated with an abrasion resistant coating, to other substrates such as metal or plastics. In a preferred embodiment, the first substrate is a glass, or plastic coated with an abrasion resistant coating, window and the second substrate is a window frame. In another preferred embodiment, the first substrate is a glass, or plastic coated with an abrasion resistant coating, window and the second substrate is a window frame of an automobile. Preferably, the glass window is cleaned prior to bonding. The plastic coated with an abrasion resistant coating can be any plastic which is clear, such as polycarbonate, acrylics, hydrogenated polystyrene or hydrogenated styrene conjugated diene block copolymers having greater than 50 percent styrene content. The coating can comprise any coating which is abrasion resistant such as a polysiloxane coating. Preferably, the coating has an ultraviolet pigmented light blocking additive. Preferably, the glass or plastic window has an opaque coating disposed in the region to be contacted with the adhesive to block UV light from reaching the adhesive.

In a preferred embodiment, the adhesive system is used to replace windows in structures or vehicles and most preferably in vehicles. The first step is removal of the previous window. This can be achieved by cutting the bead of the adhesive holding the old window in place and then removing the old window. Thereafter, the new window is cleaned and, if desired, primed. The old adhesive that is located on the window flange can be removed, although it is not necessary, and, in most cases, it is left in place, but may be cut flat with a cutting tool. The window flange may be primed with a paint primer but is not necessary. The adhesive system is applied in a bead to the periphery of the window located such that it will contact the window flange when placed in the vehicle. The window with the adhesive located thereon is then placed into the flange with the adhesive located between the window and the flange. Alternatively, the adhesive may be applied to the window flange. The adhesive bead is a continuous bead that functions to seal the junction between the window and the window flange. A continuous bead of adhesive is a bead that is located such that the bead connects at each end to form a continuous seal between the window and the flange when contacted. Thereafter the adhesive is allowed to cure.

The adhesive system is also useful for bonding large mass substrates of more than 20 Kg, up to 120 Kg, to other substrates. In one class of large mass substrates, the substrates are large windows such as those utilized in mass transportation vehicles (e.g., buses or trains).

In certain applications, the adhesive system may be utilized with a primer or activation wipe. The primer or activation wipe is typically applied to the surface of a substrate. Any solvent is allowed to volatilize away and then the adhesive system is contacted with the substrate. Preferably, the time period from application of the primer or activation wipe to application of the adhesive system to the substrate is 0.5 minutes or greater, more preferably 1 minute or greater and most preferably 2 minutes or greater.

EXAMPLES

The following examples are provided to illustrate the invention. All parts and percentages are by weight unless otherwise indicated. The raw materials used in the moisture curable adhesive and nonreactive components used in the cure accelerator are shown in Table 1.

Table 1

| Component | Supplier | Description |
|---|---|---|
| Voranol 2000 | The Dow Chemical Company | Polyoxypropylene diol with a hydroxyl number of about 55.5 and a molecular weight of 2,000 |
| Voranol 4610 | The Dow Chemical Co. | Polyoxypropylene Triol with a hydroxyl number of about 35 |
| Voranol CP 4711 | The Dow Chemical Co. | glycerin initiated ethylene oxide based propoxylated triol |
| Linplast 810P | Sasol | Di-C8-C10 alkyl esters of 1,2-benzenecarboxylic acid |
| | | |
| Prepolymer T-710 | The Dow Chemical Co. | Isocyanate end capped 4,4'-MDI-prepolymer made with Voranol 2000 and Voranol 4610 and Linplast 810P |
| Prepolymer T-721 | The Dow Chemical Co. | Isocyanate functional polyester prepolymer* |
| Vestinol 9 | Evonik | Diisnonylphthalate |
| Linplast 810P | Sasol | Di-C8-C10 alkyl esters of 1,2-benzenecarboxylic acid |
| Proglyde DMM | The Dow Chemical Co. | Dipropylene glycol dimethyl ether |
| Voranol CP 4711 | The Dow Chemical Co. | glycerin initiated ethylene oxide based propoxylated triol |
| Desmodur N 3300 | Covestro | Hexylmethylene diisocyanate (HDI) trimer |
| Jeffcat DMDEE | Airproducts | Dimorpholinodiethylether |
| Fomrez UL28 | Momentive | Dimethyltin dineodecanoate |
| Polestar R200 | Imerys | Calcinated clay |
| Nyglos 8 | IMCD Deutschland GmbH | Wollastonite |
| Chinaclay Polewhite B | Imerys | Kaolin |
| Elftex S7100 | Cabot | Carbon black |
| Silquest A 187 | GE Specialty Materials | Epoxy silane |
| 1,4-Butanediol | Arco Chemicals | 1,4-Butanediol |
| Jeffamine SD-2001 | Huntsman | Diamino polyetheramine (secondary amine) |
| Triethanolamine | The Dow Chemical Co. | Triethanolamine |
| Cat. 2013 | DuPont | 2.4% Fomrez UL 28 in Vestinol 9 |
| * Prepolymer T-721 is an isocyanate functional polyester prepolymer prepared by mixing 46.7 g of plasticizer agent (branched plasticizer), 30.15 of an iscocyanate (diphenylmethane 4,4'-diisocyanate) commercially available under the trade name Isonate M125U with 190.0 g of a polyester polyol commercially available under the trade name DYNACOL 7381. Then, the entire mixture is stirred for 8 hours at 70°C under N2 | | |

Examples 1 and 2 are isocyanate components (A-Side) formulated to have the same Ballan viscosity having the following composition, amounts are by weigh percent. The compositions of Examples 1 and 2 are shown in Table 2. In Table 2, Ballan viscosity is measured from materials conditioned at 23°C. Measuring cup and material in storage container are conditioned in a water bath at 23°C for a minimum of 1 hour. After air-free transfer of the material in the measurement cup, the cup is mounted to the ballan measuring device. The adhesive is extruded through a 2 mm diameter, 1.8 mm length nozzle at $4 \pm 0.01$ bar pressure. The extruded weight per time is measured. Press flow viscosities are calculated in g/min.

Table 2

| Component | | Ex. 1 | Ex. 2 |
|---|---|---|---|
| 1 | T-710 | 67.5 | 65.5 |
| 2 | T-721 | 1.5 | 1.5 |
| 3 | Desmodur 3300 | 2 | 2 |
| 4 | Elftex S 7100 | 19 | 19 |

(continued)

| | Component | Ex. 1 | Ex. 2 |
|---|---|---|---|
| 5 | Vestinol 9 | 4 | - |
| 6 | Linplast | - | 10 |
| 7 | DMDEE | 0.2 | 0.2 |
| 8 | Cat 2013 | 0.4 | 0.4 |
| 9 | Silquest A187 | 0.4 | 0.4 |
| 10 | Proglyde DMM | 5 | 1 |
| | Ballan 23 °C, 4 bar, 2mm, [g/min] | 13.0 | 13.0 |

Reference Examples 3 to 5, and Example 6 according to the invention are polyol components (B-Side) comprising the curatives. The components amounts are listed as weight percent.

Example 3 contains only "slow" curatives (i.e., 1,4-butane diol in combination with a higher molecular weight polyether triol).

Example 4 to 6 comprise both a "slow" curative a "fast" curative which reacts directly after mixing with the isocyanate groups of the isocyanate component. In Examples 4 and 5 the fast curative is a polyether diamine, in increasing amounts.

Example 6 comprises an alcohol containing a tertiary amine which Intramolecularly catalyzes the alcohol reaction with the isocyanate rendering these OH groups faster than respective OH groups of 1,4-butane diol.

The compositions of Examples 3 and 6 are shown in Table 3. Examples 3-5 are Reference Examples, Example 6 is according to the invention.

Table 3

| | Component | Ex. 3 | Ex. 4 | Ex. 5 | Ex. 6 |
|---|---|---|---|---|---|
| 1 | 1,4-Butandiol | 8 | 7.6 | 8 | 5.3 |
| 2 | Jeffamine SD-2001 | - | 10 | 20 | - |
| 3 | Triethanolamine | - | - | - | 2.65 |
| 4 | Voranol CP4711 | 37.1 | 34.2 | 47 | 66.2 |
| 5 | Chinaclay Polewhite B | 54.9 | 34.2 | - | - |
| 6 | Apiral EXS | - | 7 | - | - |
| 7 | Apiral 60 | - | 7 | - | - |
| 8 | Elftex S7100 | - | - | 25 | 25.85 |

Referring to Table2, the isocyanate components Ex. 1 and Ex. 2 are made by the following procedure: Components 1 and 3 are added to the mixer and degassed under vacuum for 40 minutes. Item 4, after being predried, is added to the mixer and mixed for 5 minutes at slow speed under vacuum until they are sufficiently wetted by the other items. The speed of the mixer is slowly increased to disperse item 4 (carbon black) for 40 minutes under full vacuum. Then the mixture is heated to 65°C under stirring. Component 2 is added after it is preheated to the same temperature of 65°C. Then the heating is turned and cooling is activated to cool down to 40°C. Then the components 5 to 10 are added and mixed for a further hour under vacuum. The mixer is then cooled to ambient temperature and the moisture curable adhesive is discharged into a container under dry conditions.

Table 4 shows the cure accelerator Example and Comparative Examples. Each of these is made by essentially the same procedure as follows. Reffering to Table 3, the components 1 and 4 are added to a mixer and degassed under vacuum for 30 minutes. Then the pre-dried components 5 to 8 are added and mixed slowly for 5 minutes at slow speed under vacuum until they are sufficiently wetted by the other items. The speed of the mixer is slowly increased to disperse the added components 5 to 8 for 40 minutes under full vacuum. Finally, the items 2 and 3 are added and mixed under vacuum for 20 minutes. The mixture is then discharged into a sealed container.

Each of the cure accelerator formulations shown in Table 4 are placed into an adhesive dispensing system (two component sausage) with the above moisture curable adhesive as described in Example 1 of US Application No. 61/977668 described above. The volumetric ratio of the moisture curable adhesive to the cure accelerator is 9 to 1. For each Example and Comparative Example, the isocyanate index is essentially the same. The moisture curable adhesive and cure accelerator are dispensed in the same manner as described in Example 1 of the aforementioned US Application.

The compositions of Comparative Example A and Examples 8 to 11 are shown in Table 4. Examples 8 and 10 are Reference Examples, and Examples 9 and 11 are according to the invention.

The following properties for Comparative Example A and Examples 8 to 11 are measured and also reported in Table 4:

"Decking" performance is measured using a penetrometer. A triangular shaped adhesive bead is applied with a nozzle having a triangular shape with a base of 7 mm and a height of 14 mm. A weight of 115 g (100 g weight + 15 g connecting rod) is hold in placed precisely on the tip of the adhesive bead. The grip on the weight is released for 5 seconds and allowed to sink into the adhesive bead. The depth of penetration is measured in millimeters. The penetration depth is measured directly 1 minute after application of the adhesive bead and then every 2 minutes until it is not anymore possible to easily squeeze the adhesive. The decking performance directly after the adhesive is mixed in the static mixer at time 0 is predicted by a linear approximation of the penetration depth in the time in which the adhesive can be squeezed or at maximum the first 20 minutes;

"Impact strength" is determined via GEX method 344. Metal coupons are placed in a sample holder. The adhesive is applied between the prongs so that it overflows onto tape. Afterwards, coupons (76 x 25 x 5 mm) are placed on top of the prongs and the over standing adhesive is removed slowly with a spatula and it is endured that the bead is of perfect shape (25 x 13 x 5 mm). After that, the test specimens are stored for the desired cure time (e.g. 15 min & 30 min) and environmental conditions. Then, the impact pendulum is brought up and latched, the test specimen fixed in position and the hammer released (with a 10 lb hammer). The total energy that the adhesive can withstand, prior to destructive failure is measured in J;

"Lap shear strength" is measured according to DIN EN 527 on a suitable device, e.g., shear strength device Zwick 1435 with an FHM 8606.00.00 or 8606.04.00 mounting device. Adhesive bond dimension of 10x25x1.5 mm are used for the lap shear specimens. Lap shear specimens are tested after 1h, 2h, 4h and 7d curing time at 23°C/50% relative humidity;

and

"Tensile Properties: Strength, Elongation, and E Modulus" are determined according to DIN EN ISO 527-1.

Table 4

|  | Com. Ex. A | Ex. 8 | Ex. 9 | Ex. 10 | Ex.11 |
|---|---|---|---|---|---|
| Composition |  |  |  |  |  |
| A-Side | Ex. 2 | Ex. 2 | Ex. 2 | Ex. 1 | Ex. 1 |
| B-Side | Ex. 3 | Ex. 4 | Ex. 6 | Ex. 5 | Ex. 6 |
| Properties |  |  |  |  |  |
| Linear Approximate Decking Height, mm |  |  |  |  |  |
| After 0 min | 7.3 | 6.5 | 5.3 | 5.5 | 5.0 |
| After 1 min | 7.5 | 6.5 | 5.2 | 5.4 | 4.9 |
| After 3 min | 6.6 | 6.3 | 4.6 | 4.9 | 4.2 |
| After 5 min | 6.5 | 5.8 | 3.5 | 4.4 | 3.9 |
| After 7 min | 6.5 | 5.4 | 3.2 | 3.8 | 3.1 |
| After 9 min | 6.5 | 5.2 | 2.9 | 2.6 | 3.0 |
| After 11 min | 6.0 | 5.2 | 1.7 | 2.5 | 2.5 |
| After 13 min | 5.6 | 5.1 | 1.8 | 2.1 | 1.6 |
| After 15 min | 5.5 | 4.6 | - | 2.2 | 1.8 |
| After 17 min | 4.9 | 4.3 | - | 2.7 | - |
| After 19 min | 4.7 | 4.2 | - | 2.2 | - |
| After 21 min | 4.2 | 4.0 | - | 1.6 | - |
| After 23 min | 4.2 | 3.9 | - | - | - |
| After 25 min | 4.0 | 3.7 | - | - | - |

(continued)

| Properties | | | | | |
|---|---|---|---|---|---|
| Linear Approximate Decking Height, mm | | | | | |
| Decking open time, min | $\geq 10$ | $\geq 10$ | $\geq 10$ | $\geq 10$ | $\geq 10$ |
| Impact Strength, J | | | | | |
| @ 15 min | 1.3 | 2.3 | 2.8 | 2.9 | 3.9 |
| @ 30 min | 2.2 | 6.4 | 5.2 | 6.1 | 7.5 |
| Lap Shear Strength, MPa | | | | | |
| @ 1 hour | 0.02 | 0.04 | 0.04 | 0.7 | 1.6 |
| @ 2 hours | 0.06 | 0.11 | 0.6 | 1.4 | 4.0 |
| @ 7 day | - | - | 5.2 | 9.5 | 8.8 |
| E-modulus, MPa | 1.9 | 1.8 | - | - | 2.1 |
| Elongation @ break, % | 280 | 360 | - | - | 290 |
| Tensile Strength, MPa | 4.9 | 6.0 | - | - | 6.5 |

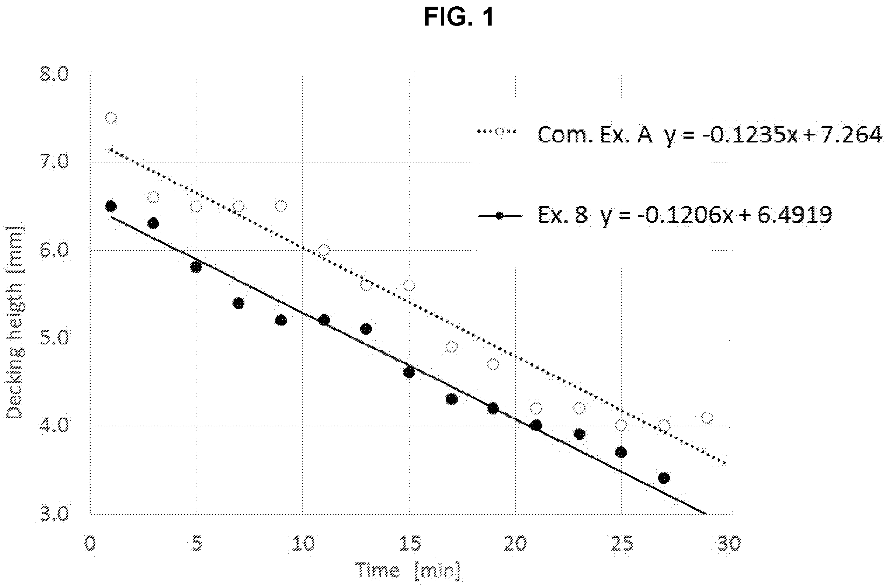

To analyze the effect of the fast curative on the decking performance, the reduction of decking height over 20 minutes or the opentime of the adhesive has been linearly approximated, **FIG. 1.** The linear fit has been used to extrapolate the decking height at the time t=0.

The linear approximated decking height at 0 min of Comparative Example A with 7.3 mm is higher than the one of the inventive Example 8, with 6.5 mm. The incorporation of 10% of Jeffamine SD-2001 a secondary polyether diamine into the accelerator component results in a reduction of initial decking height of 11%.

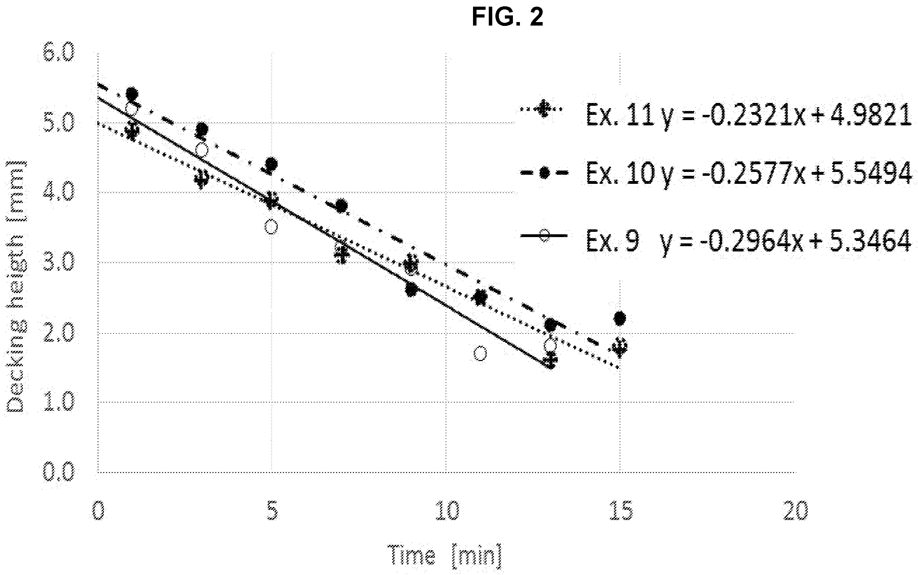

As shown in **FIG. 2,** for Example 10 the addition of 20% of Jeffamine SD-2001 (the secondary polyether diamine) results in a further reduction of the linear approximated decking height at 0 min to 5.5 mm. This is an improvement of initial decking height by even 1.8 mm or 25% relative height. Besides the positive effect on the initial decking height both formulations show an improved impact peel strength after 15 and 30 min compared to Comparative Example A due to the higher conversion at the time due to the reaction of the faster curative.

Examples 9 and 11 employ the inventive polyol component Example 6 which contains triethanol amine as the fast curative. The linear approximated decking height at 0 min is with 5.3 mm and 5.0 mm comparable **(FIG. 2)** and significantly lower compared to the comparative polyol component Example 3 with 7.3 mm. The trifunctional triethanolamine results in a faster crosslinking by the higher functionality which results in a generally faster strength build up over time. The opentime is in all examples still sufficiently high with $\geq 10$ min.

## Claims

1. An adhesive system comprised of a moisture curable adhesive comprised of

   A) an isocyanate terminated prepolymer
   and
   B) a cure accelerator comprised of

      i) an isocyanate reactive compound being triethanolamine,
      and
      ii) a polyol not having a primary, secondary or tertiary amino group, or a primary thiol group wherein the polyol is selected from a diol and/or triol,

   wherein the isocyanate reactive compound (i) is present in an amount less than 5% by weight of the cure accelerator (B).

2. The adhesive system of any one of Claim 1 wherein the polyol (ii) is butanediol.

3. The adhesive system of any one of Claims 1 to 2 wherein the amount of water in the cure accelerator is less than 1 %

based upon the total weight of the cure accelerator and the moisture curable adhesive.

4. The adhesive system of any one of Claims 1 to 3, wherein the prepolymer is comprised of an isocyanated terminated polyether prepolymer.

5. The adhesive system of any one of Claims 1 to 4, wherein the isocyanate terminated polyether prepolymer is comprised of a polyether backbone comprised of an ethylene oxide, a propylene oxide, or combination of these.

6. The adhesive system of any one of Claims 1 to 5, wherein the moisture curable adhesive further comprises one or more of a filler, a plasticizer, a polyisocyanate monomer or oligomer, or a catalyst.

7. The adhesive system of any one of Claims 1 to 6, wherein the moisture curable adhesive comprises a plasticizer which is linear, branched, or combination thereof.

8. A method of accelerating the cure of an adhesive composition comprising:

    a) providing a moisture curable adhesive composition comprised of

        A) an isocyanate terminated prepolymer
        and
        B) a cure accelerator comprised of

            i) an isocyanate reactive compound being triethanolamine, and
            ii) a polyol not having a primary, secondary or tertiary amino group, or a primary thiol group wherein the polyol is selected from a diol and/or triol;

        wherein the isocyanate reactive compound (i) is present in an amount less than 5% by weight of the cure accelerator (B);
        wherein the isocyanate terminated prepolymer and cure accelerator are separately provided;

    b) mixing the cure accelerator and the isocyanate terminated prepolymer to form an adhesive mixture;
    c) applying the adhesive mixture to at least a portion of a first substrate;
    d) contacting the substrate having the adhesive mixture thereon with a second substrate such that the adhesive mixture is therebetween; and
    e) allowing the adhesive mixture to cure bonding said substrates together.

9. The method of Claim 8 wherein step b) is performed using a 1K application gun or automated application equipment from drums.

10. The method of any one of Claims 8 or 9, wherein the first substrate is a substrate wherein at least a portion of the substrate is optically transparent and the second substrate is a vehicle or building, wherein preferably the first substrate has an opaque portion where the adhesive mixture is applied and contacted with the second substrate, more preferably wherein the first substrate is glass or polycarbonate.

**Patentansprüche**

1. Klebstoffsystem, das aus einem feuchtigkeitshärtenden Klebstoff besteht, der besteht aus

        A) einem isocyanatterminierten Präpolymer
        und
        B) einem Härtungsbeschleuniger, der besteht aus

            i) einer isocyanatreaktiven Verbindung, die Triethanolamin ist, und
            ii) einem Polyol, das primäre, sekundäre oder tertiäre Aminogruppen nicht aufweist, oder eine primäre Thiolgruppe, wobei das Polyol aus einem Diol und/oder Triol ausgewählt wird,

    wobei die isocyanatreaktive Verbindung (i) in einer Menge von weniger als 5 Gew.-% des Härtungsbeschleunigers (B) vorhanden ist.

**2.** Klebstoffsystem nach einem der Ansprüche 1, wobei es sich bei dem Polyol (ii) um Butandiol handelt.

**3.** Klebstoffsystem nach einem der Ansprüche 1 bis 2, wobei die Wassermenge im Härtungsbeschleuniger weniger als 1 % beträgt basierend auf dem Gesamtgewicht des Härtungsbeschleunigers und des feuchtigkeitshärtenden Klebstoffs.

**4.** Klebstoffsystem nach einem der Ansprüche 1 bis 3, wobei das Präpolymer aus einem isocyanatterminierten Polyether-Präpolymer besteht.

**5.** Klebstoffsystem nach einem der Ansprüche 1 bis 4, wobei das isocyanatterminierte Polyether-Präpolymer aus einem Polyether-Rückgrat besteht, das aus Ethylenoxid, Propylenoxid oder einer Kombination dieser besteht.

**6.** Klebstoffsystem nach einem der Ansprüche 1 bis 5, wobei der feuchtigkeitshärtende Klebstoff weiter einen oder mehrere von einem Füllstoff, einem Weichmacher, einem Polyisocyanat-Monomer oder -Oligomer oder einem Katalysator umfasst.

**7.** Klebstoffsystem nach einem der Ansprüche 1 bis 6, wobei der feuchtigkeitshärtende Klebstoff einen Weichmacher umfasst, der linear, verzweigt oder eine Kombination davon ist.

**8.** Verfahren zum Beschleunigen der Aushärtung einer Klebstoffzusammensetzung, umfassend:

a) Bereitstellen einer feuchtigkeitshärtenden Klebstoffzusammensetzung, die besteht aus

A) einem isocyanatterminierten Präpolymer
und
B) einem Härtungsbeschleuniger, der besteht aus

i) einer isocyanatreaktiven Verbindung, die Triethanolamin ist, und
ii) einem Polyol, das primäre, sekundäre oder tertiäre Aminogruppen nicht aufweist, oder eine primäre Thiolgruppe, wobei das Polyol aus einem Diol und/oder Triol ausgewählt wird;

wobei die isocyanatreaktive Verbindung (i) in einer Menge von weniger als 5 Gew.- % des Härtungsbeschleunigers (B) vorhanden ist;
wobei das isocyanatterminierte Präpolymer und der Härtungsbeschleuniger separat bereitgestellt werden;

b) Mischen des Härtungsbeschleunigers und des isocyanatterminierten Präpolymers zur Bildung einer Klebstoffmischung;
c) Aufbringen der Klebstoffmischung auf mindestens einen Abschnitt eines ersten Substrats;
d) Kontaktieren des Substrats, das die Klebstoffmischung darauf aufweist, mit einem zweiten Substrat, sodass sich die Klebstoffmischung dazwischen befindet; und
e) Ermöglichen von Aushärten der Mischung, um die Substrate miteinander durch Aushärtung zu verbinden.

**9.** Verfahren nach Anspruch 8, wobei Schritt b) mit einer 1K-Applikationspistole oder einer automatisierten Applikationsausrüstung aus Fässern durchgeführt wird.

**10.** Verfahren nach einem der Ansprüche 8 oder 9, wobei das erste Substrat ein Substrat ist, das mindestens in einem Abschnitt des Substrats optisch transparent ist, und das zweite Substrat ein Fahrzeug oder Gebäude ist, wobei das erste Substrat bevorzugt einen undurchsichtigen Abschnitt aufweist, auf den die Klebstoffmischung aufgebracht wird und mit dem zweiten Substrat in Kontakt kommt, wobei das erste Substrat bevorzugter Glas oder Polycarbonat ist.

**Revendications**

**1.** Système adhésif composé d'un adhésif durcissable à l'humidité composé

A) d'un prépolymère à terminaison isocyanate

et

B)d'un accélérateur de durcissement composé

i) d'un composé réactif à l'isocyanate étant la triéthanolamine, et

ii) d'un polyol ne présentant pas de groupe amino primaire, secondaire ou tertiaire, ni un groupe thiol primaire, dans lequel le polyol est choisi parmi un diol et/ou un triol,

dans lequel le composé réactif à l'isocyanate (i) est présent dans une quantité inférieure à 5 % par poids de l'accélérateur de durcissement (B).

2. Système adhésif selon la revendication 1, dans lequel le polyol (ii) est le butanediol.

3. Système adhésif selon l'une quelconque des revendications 1 à 2, dans lequel la quantité d'eau dans l'accélérateur de polymérisation est inférieure à 1 % en fonction du poids total de l'accélérateur de durcissement et de l'adhésif durcissable à l'humidité.

4. Système adhésif selon l'une quelconque des revendications 1 à 3, dans lequel le prépolymère est composé d'un prépolymère de polyéther à terminaison isocyanée.

5. Système adhésif selon l'une quelconque des revendications 1 à 4, dans lequel le prépolymère de polyéther à terminaison isocyanate est composé d'un squelette de polyéther composé d'un oxyde d'éthylène, d'un oxyde de propylène ou d'une combinaison de ceux-ci.

6. Système adhésif selon l'une quelconque des revendications 1 à 5, dans lequel l'adhésif durcissable à l'humidité comprend en outre un ou plusieurs éléments parmi une charge, un plastifiant, un monomère ou un oligomère de polyisocyanate, ou un catalyseur.

7. Système adhésif selon l'une quelconque des revendications 1 à 6, dans lequel l'adhésif durcissable à l'humidité comprend un plastifiant qui est linéaire, ramifié ou une combinaison de ceux-ci.

8. Procédé d'accélération du durcissement d'une composition adhésive comprenant :

a) la fourniture d'une composition d'adhésif durcissable à l'humidité composée de

A) un prépolymère à terminaison isocyanate
et
B) un accélérateur de durcissement composé

i) d'un composé réactif à l'isocyanate étant la triéthanolamine, et

ii) d'un polyol ne présentant pas de groupe amino primaire, secondaire ou tertiaire, ni un groupe thiol primaire, dans lequel le polyol est choisi parmi un diol et/ou un triol ;

dans lequel le composé réactif à l'isocyanate (i) est présent dans une quantité inférieure à 5 % en poids de l'accélérateur de durcissement (B) ;
dans lequel le prépolymère à terminaison isocyanate et l'accélérateur de durcissement sont fournis séparément ;

b) le mélange de l'accélérateur de durcissement et le prépolymère à terminaison isocyanate pour former un mélange adhésif ;
c) l'application du mélange adhésif sur au moins une partie d'un premier substrat ;
d) la mise en contact du substrat présentant le mélange adhésif sur celui-ci avec un second substrat de sorte que le mélange adhésif se trouve entre ceux-ci ; et
e) le fait de laisser le mélange adhésif durcir en collant lesdits substrats ensemble.

9. Procédé selon la revendication 8, dans lequel l'étape b) est réalisée à l'aide d'un pistolet d'application 1K ou d'un équipement d'application automatisé à partir de fûts.

10. Procédé selon l'une quelconque des revendications 8 ou 9, dans lequel le premier substrat est un substrat dont au moins une partie est optiquement transparente et le second substrat est un véhicule ou un bâtiment, dans lequel de préférence le premier substrat présente une partie opaque où le mélange adhésif est appliqué et mis en contact avec le second substrat, plus préférentiellement dans lequel le premier substrat est en verre ou en polycarbonate.

FIG. 1

EP 3 990 563 B1

# FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4374237 A
- US 4687533 A
- US 4780520 A
- US 5063269 A
- US 5623044 A
- US 5603798 A
- US 5922809 A
- US 6015475 A
- US 6512033 B
- US 6657035 B
- US 6709539 B
- US 7101950 A
- US 7226523 B
- US 7361292 B
- US 8236891 B
- US 6133398 A

- EP 0873369 A
- CA 2564992
- WO 2015171307 A
- US 5976305 A
- EP 1524282 A
- US 5852103 A
- US 7101950 B
- WO 2012151085 A
- US 9821512 B
- US 6613816 B
- US 20020100550 A
- US 61977668 B, Zhu
- US 4525511 A
- US 3707521 A
- US 3779794 A